# EUROPÄISCHE PATENTSCHRIFT

(11) **EP 1 108 168 B1**
(45) Veröffentlichungstag und Bekanntmachung des Hinweises auf die Patenterteilung: **06.11.2002**
(21) Anmeldenummer: 99968700.7
(22) Anmeldetag: 28.08.1999
(51) Int. Cl.: F16H 61/30

(54) **SCHALTVORRICHTUNG FÜR KRAFTFAHRZEUG-WECHSELGETRIEBE**
SHIFTING DEVICE FOR A VARIABLE SPEED AUTOMOBILE TRANSMISSION
DISPOSITIF DE COMMANDE DE BOITES DE VITESSES DE VEHICULES

(30) Priorität: 02.09.1998 DE 19839854
(43) Veröffentlichungstag der Anmeldung: 20.06.2001
(73) Patentinhaber: ZF FRIEDRICHSHAFEN Aktiengesellschaft, 88038 Friedrichshafen (DE)
(72) Erfinder: FISCHER, Dieter, D-88149 Nonnenhorn (DE); SPÄTH, Klaus, D-88276 Berg (DE)
(86) Internationale Anmeldenummer: EP9906349
(87) Internationale Veröffentlichungsnummer: WO00014437

(56) Entgegenhaltungen:
- EP-A- 0 916 875
- DE-A- 3 238 219
- DE-A- 3 705 172
- DE-A- 19 539 471
- FR-A- 2 588 516
- GB-A- 2 111 613
- US-A- 2 138 148
- US-A- 4 262 784

## Beschreibung

Die Erfindung betrifft eine Schaltvorrichtung für Kraftfahrzeug-Wechselgetriebe nach dem Oberbegriff des jeweiligen Anspruchs 1 bzw. 2 bzw. 3 bzw. 4 bzw. 5.

Bei derartigen Schaltvorrichtungen dient die Drehbewegung der Schaltstange zur Vorwahl der einzelnen Schaltgassen und erfordert im allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muß er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Bei Änderung der Schaltgestängeübersetzung ändert sich auch der Beginn der Servounterstützung bzw. diese muß durch Modifikation des Ventils an die Gestängeübersetzung angepaßt werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, daß sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischen Dämpfer den pneumatischen Kraftteil. Die Wege zwischen Steuerteil und Kraftteil sind lang und der Anbau ist platzraubend. Beschädigungen der Druckluftleitungen zwischen Steuerteil und Kraftteil können nicht vermieden werden.

Aus der DE 32 38 219 A1 ist ein hilfskraftbetätigtes Getriebe bekannt, bei dem die Gänge mittel der Kraft eines Gangzylinders eingelegt werden. Die Getriebeschaltung weist eine vom Fahrer betätigbare Schnellschalteinrichtung auf, welche bewirkt, dass die Gänge bei Bedarf mit erhöhter Hilfskraft eingelegt werden können. Hierzu wird der Gangzylinder mit einem gegenüber einer Normalschaltung erhöhten Druck beaufschlagt, wodurch ein schnelleres Schalten als im Normalfall erreicht wird. Das führt dazu, dass in dieser Schnellschaltsituation die Synchronisierung stärker belastet wird als im Normalfall. In dieser Notsituation wird eine Schädigung der Synchronisierung, verbunden mit starken Belastungen und einer schnelleren Abnutzungen des Getriebes, billigend in Kauf genommen.

Aus der DE 195 39 471 ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationphase andauert, kann er unmittelbar spüren. Bei dieser Schaltvorrichtung bleibt die beim Schalten auftretende Belastung der Synchronisiereinrichtungen des zu schaltenden Ganges verbesserungsbedürftig.

Ausgehend von dem vorgenannten Stand der Technik liegt der Erfindung die Aufgabe zugrunde, eine Schaltvorrichtung aufzuzeigen, die die Synchronbelastungen bei einer Schaltvorrichtung mit einer Servounterstützung reduziert.

Die Aufgabe wird gelöst durch eine Schaltvorrichtung mit den Merkmalen des Anspruchs 1. Alternativen sind Gegenstand von nebengeordneten Ansprüchen.

Erfindungsgemäß wird zwischen dem Vorratsbehälter für die unterstützende Druckluft und der Unterstützungseinrichtung eine Reduziereinrichtung vorgesehen. Dadurch wird die der Unterstützungseinrichtung zugeführte Druckluft begrenzt. Durch eine Begrenzung der Druckluft wird eine Begrenzung der Unterstützungskraft erreicht, um eine Anpassung an zulässige Belastungen in den von der Unterstützungskraft beaufschlagten Bauteilen zu erzielen. Insbesondere wird an den Synchronisiereinrichtungen der einzelnen Gangstufen, die von den Schaltschienen beim Schalten mit Unterstützungskraft betätigt werden, eine Reduzierung der Synchronbelastung ermöglicht. Dadurch werden die Reibflächen zur Angleichung der Drehzahlen in den Synchronisierungen nicht so hoch belastet und erhalten eine höhere Standzeit.
Als eine erste Alternative zeigt die Reduziereinrichtung eine Drossel, über die sich ein verzögerter Aufbau der Unterstützungskraft erreichen läßt. Damit wird die vom Fahrer ausgelöste Handschaltkraft mit einer einstellbaren Verzögerung von der Unterstützungseinrichtung verstärkt und auf die Schaltwelle übertragen. Die Verwendung eines Druckreduzierventils als Reduziereinrichtung als weitere Alternative ermöglicht eine gezielte Einstellung der Unterstützungskraft, je nach Anforderungen des Fahrzeugherstellers oder auch des Fahrers. Die gezielte Einstellung kann in einer weiteren Alternative auch derart vorgesehen sein, daß in verschiedenen Schaltgassen unterschiedlich hohe Unterstützungskräfte zur Verfügung gestellt werden. So sind in den niedrigen Gangstufen die notwendigen Unterstützungskräfte größer als in den höheren Gangstufen, was bei einer gleich hohen Unterstützung entweder zu hohen Synchronbelastungen führen kann, oder andererseits zu einer nicht ausreichenden Unterstützung der Handschaltkraft.

Die vorstehende erläuterte Alternative sieht ein Druckbegrenzungsventil vor. Das Druckbegrenzungsventil ist vorzugsweise ein 2/2-Wegeventil oder ein 3/2-Wegeventil. Auch diese Ausgestaltung führt zu einer Verminderung der Synchronbelastungen. Bis zum Erreichen des Grenzdruckes wird in dieser Ausgestaltung die volle Unterstützung der Handschaltkraft gewährleistet. Erst ab Erreichen des Grenzdrukkes erfolgt eine Reduzierung auf eine Höhe der Unterstützungskraft, die die Synchronisiereinrichtungen weniger stark belastet.

In einer weiteren Alternative wird die Reduziereinrichtung durch ein elektrisch angesteuertes 2/2-Wegeventil gebildet, das die Zufuhr der Druckluft vollständig unterbindet. Dadurch läßt sich eine Gassensperre aufbauen, die verhindert, daß bei einem nicht erlaubten Wählen einer Schaltgasse Gangstufen eingelegt werden können, deren Benutzung eine Überdrehzahl hervorrufen würde.
Eine weitere Alternative zeigt, daß die Möglichkeiten zur Zufuhr von Druckluft zur Unterstützungseinrichtung auf die Momente während der Bewegung des Fahrzeugs reduziert werden, die zum Wechseln einer eingelegten Gangstufe notwendig sind. Diese Momente während des Fahren des Fahrzeugs sind nur dann gegeben, wenn die Fahrzeugkupplung betätigt wird. Die Zuleitung für die Druckluft führt vom Vorratsbehälter über die Fahrzeugkupplung zur Unterstützungseinrichtung und wird nur dann durchgängig geschaltet, wenn die Fahrzeugkupplung betätigt wird.

Die Schaltbewegung wird durch Druckluft als Hilfskraft unterstützt, während die Wählbewegung mit der Hand ohne Unterstützung ausgeführt wird. Dadurch, daß nur ein Teil des Gangwechsels durch eine Servokraft unterstützt wird, vereinfacht sich der Aufbau der Schalteinrichtung gegenüber vollständig servounterstützten Schalteinrichtungen. Kosten und Anbauaufwand werden erheblich reduziert, auch eine Nachrüstung bei bereits eingebauten Getrieben ist problemlos möglich. Der Fahrer kann weiterhin von Hand schalten, wenn der Luftdruck durch einen Schaden in der Druckluft-Anlage zu klein sein sollte oder gar ganz ausfallen sollte. Dazu sind keine irgendwie gearteten Umschaltmaßnahmen erforderlich. Die Bremsfähigkeit des Kraftfahrzeuges, sofern sie durch das Getriebe geboten wird, bleibt gesichert.

Die Druckluftunterstützung steuert einen großen Teil der beim Schalten aufzuwendenden Kraft bei, jedoch nur so viel, daß dem Fahrer das Schaltgefühl erhalten bleibt. Die manuell vom Fahrer aufzubringende Handkraft wird durch die pneumatische Schaltunterstützung auf einen Bruchteil der insgesamt erforderlichen Kraft reduziert. Synchronisierte Nutzfahrzeug-Getriebe werden auch bei schweren Fahrzeugen zu Leichtschaltgetrieben. Bei Fahrten auf Gefällstrecken wird das Zurückschalten der Getriebe, insbesondere in den unteren Gängen, außerordentlich erleichtert und dadurch wird ein erheblicher Beitrag zur Steigerung der Unfallsicherheit beigesteuert.

Die erfindungsgemäße Schaltvorrichtung findet ihren Einsatzbereich bei allen Synchrongetrieben mit H-Schaltung, Doppel-H-Schaltung und überlagerter H-Schaltung. Sie findet auch für den Anbau am Getriebe im vom Fahrzeughersteller stark eingeschränkten Bauraum ausreichend Platz. Bei einem erforderlichen Tausch oder einer Nachrüstung sind die Ausfallzeiten für den Fahrzeugbetreiber erfreulich kurz, da die gesamte Schaltvorrichtung zusammen ausgetauscht bzw. montiert werden kann, ohne daß spezielle Einstellungen vor Ort am Fahrzeug vorgenommen werden müssen. Ebenfalls hat der Fahrer während des Schaltvorganges eine ständig spürbare Rückkopplung zum Schaltablauf im Getriebe. Über die vorhandene mechanische Verbindung zwischen dem Schalthebel und der Synchronisierung im Getriebe spürt der Fahrer wie bei einer mechanischen und nicht unterstützten Schaltvorrichtung die Reaktionen des Getriebes. Somit bleibt ihm die Eingriffsmöglichkeit in den Schaltablauf jederzeit erhalten und er kann jederzeit den ablaufenden Schaltprozeß abbrechen. Dem Fahrer bleibt bei einem Ausfall der Druckluftunterstützung uneingeschränkt die Schaltbarkeit des Getriebes erhalten, so daß er in Notfällen das Fahrzeug, wohl mit erhöhtem Kraftaufwand, doch aber sicher, durch Änderungen der Übersetzung abbremsen kann.

Der Anbau der Schaltvorrichtung erfolgt fest am Getriebegehäuse, so daß keine Relativbewegungen zwischen Getriebe und Schaltvorrichtung erfolgen. Es sind keine bewegten Leitungen, Ventile oder Zylinder zwischen Getriebe und Schaltvorrichtung mehr vorhanden. Kugelgelenke und Konsolen sind nicht mehr erforderlich. Eine Nachrüstung der Schaltvorrichtung kann ohne ein Verkürzung des Schaltgestänges erfolgen. Die Einbaulage der pneumatischen Servounterstützungseinrichtung an der Schaltvorrichtung ist beliebig, sie kann angesteckt oder angeflanscht werden.

Die Erfindung wird anhand von Zeichnungen näher erläutert.

Es zeigen:
- Fig. 1: eine Schaltanlage nach dem Stand der Technik;
- Fig. 2: die Anordnung eines Druckreduzierventils;
- Fig. 3: eine erste schaltgassenabhängige Anordnung;
- Fig. 4: eine zweite schaltgassenabhängige Anordnung;
- Fig. 5: eine Anordnung mit Absperrventil;
- Fig. 6: eine kupplungsabhängige Anordnung;
- Fig. 7: eine erste Anordnung eines Druckbegrenzungsventils und
- Fig. 8: eine zweite Anordnung eines Druckbegrenzungsventils.

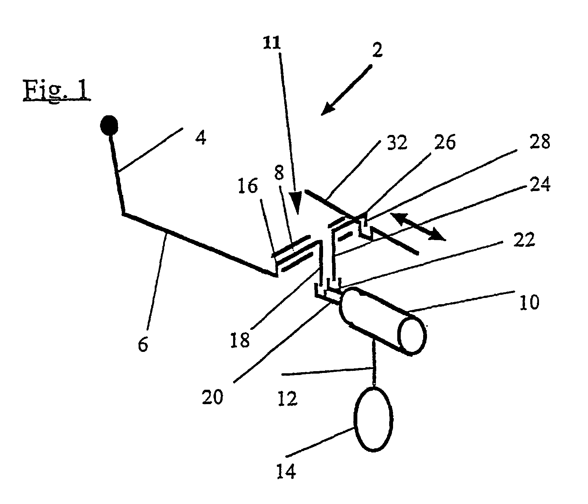

Die Fig. 1 zeigt in einer Skizze die Schaltanlage 2 eines Kraftfahrzeuges nach dem Stand der Technik gemäß DE-A-195 39 471. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlußleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel. 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so daß der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

Die Fig, 2 zeigt ein Druckreduzierventil 34 in bekanntem Aufbau, das zwischen dem Vorratsbehälter 14 und der Unterstützungseinrichtung 10 angeordnet ist. Das Druckreduzierventil 34 ist über die Anschlußleitung 36 mit dem Vorratsbehälter 14 und über die Anschlußleitung 12 mit der Unterstützungseinrichtung 10 verbunden.

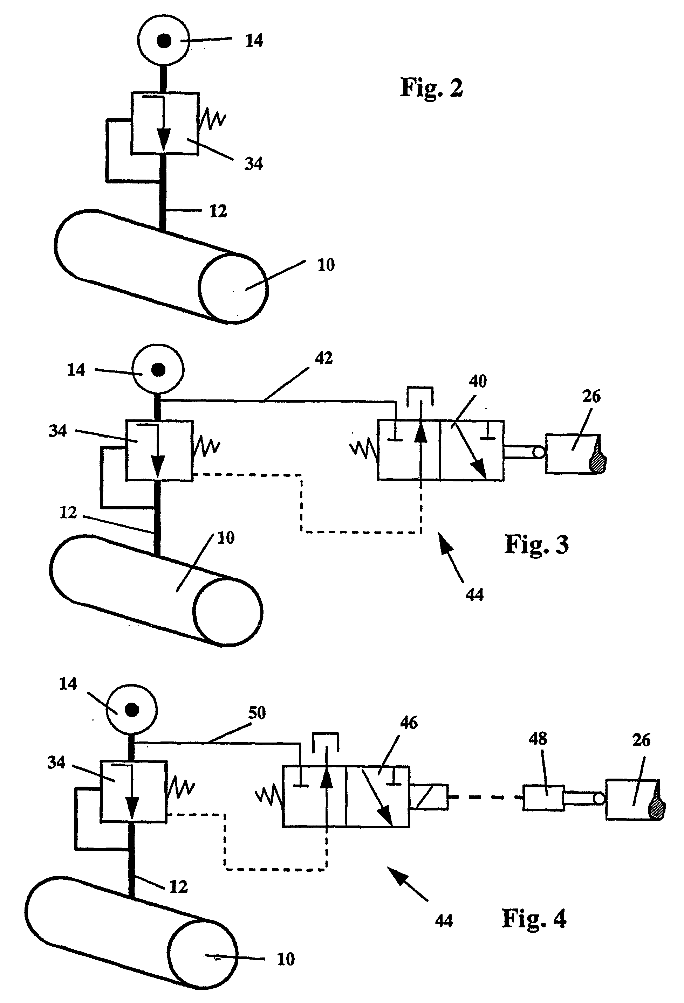

Die Fig. 3 zeigt das Druckreduzierventil 34 in einem Schaltungsaufbau 38. Ein 2/3-Wegeventil 40 wird von der Schaltwelle 26 oder alternativ von einer hier nicht dargestellten Schaltschiene mechanisch betätigt. Das Ventil 40 ist über die Anschlußleitung 42 mit dem Vorratsbehälter 14 verbunden.

Die Fig. 4 zeigt das Druckreduzierventil 34 in einem Schaltungsaufbau 44. Ein 2/3-Wegeventil 46 wird hier elektrisch betätigt und ist mit einem elektrischen Schalter 48 verbunden, der von der Schaltwelle 26 oder alternativ von einer hier nicht dargestellten Schaltschiene betätigt wird. In der hier gezeigten Stellung des Ventils 46 wird die Druckluft vom Vorratsbehälter 14 über die Anschlußleitung 50 gesperrt, so daß die Druckluft über das Druckreduzierventil 34 zur Unterstützungseinrichtung 10 gelangt. Wird jedoch von der Schaltwelle 26 der elektrische Schalter 48 betätigt und das Ventil 46 elektrisch in die zweite Stellung verschoben, was einer zweiten gewählten Schaltgasse entspricht, so kann die Druckluft durch das Ventil 46 strömen, das Druckreduzierventil 34 ansteuern und dadurch die Höhe des reduzierten Druckes verändern.

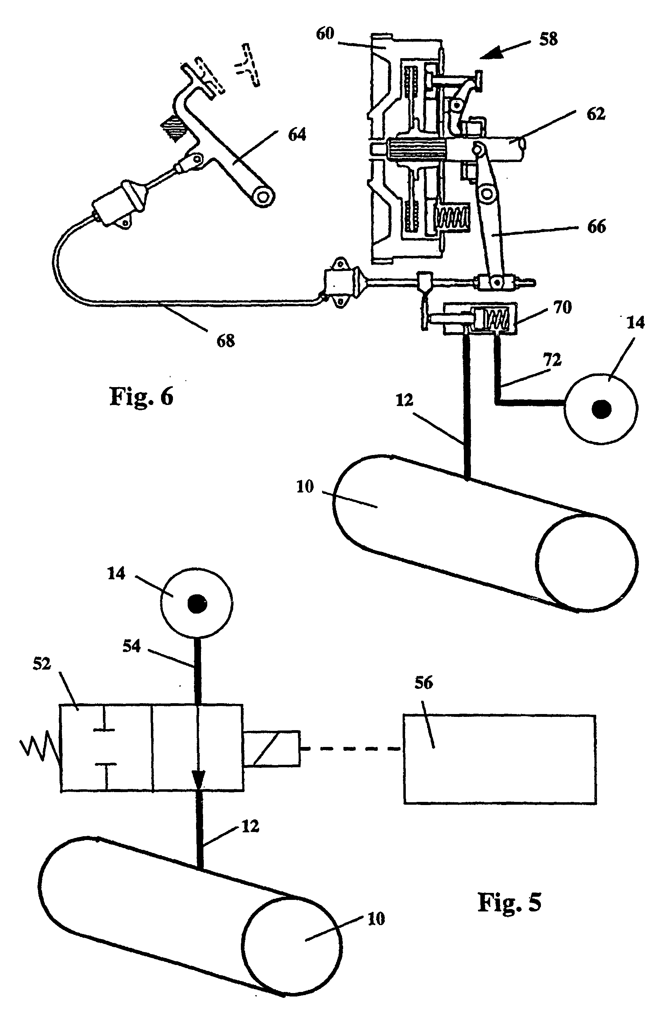

Die Fig. 5 zeigt ein elektrisch betätigtes 2/2-Wegeventil 52 in bekanntem Aufbau, das zwischen dem Vorratsbehälter 14 und der Unterstützungseinrichtung 10 angeordnet ist. Das 2/2-Wegeventil 52 ist über die Anschlußleitung 54 mit dem Vorratsbehälter 14 und über die Anschlußleitung 12 mit der Unterstützungseinrichtung 10 verbunden. Das 2/2-Wegeventil 52 ist auch elektrisch mit einer Steuereinrichtung 56 des Getriebes oder des Fahrzeugs verbunden, in der die aktuellen Fahrzeugzustandsdaten analysiert werden. Wenn der Fahrer in einer ausgewählten Gasse in einen Gang schalten will, der für den derzeitigen Fahrzustand nicht erlaubt ist, so wird ihm die Servokraft versagt. Wird in die andere und erlaubte Schaltgasse gewechselt, so wird das Ventil 52 verschoben und die Druckluft kann durch das Ventil 52 strömen und zur Unterstützungseinrichtung 10 gelangen.

Die Fig. 6 zeigt schematisch eine Reibungskupplung 58, wie sie üblicherweise zwischen einer an einem Antriebsmotor angeordneten Schwungmasse 60 und einer Eingangswelle 62 eines Getriebes vorgesehen ist. Die Reibungskupplung 58 wird manuell über ein Pedal 64 vom Fahrer betätigt. Zwischen Pedal 64 und dem Ausrückhebel 66 ist eine hydraulische Verbindungsleitung 68 vorgesehen. Der Ausrückhebel 66 ist mit einem Ventil 70 verbunden, das in Abhängigkeit von der Verstellung des Ausrückhebels betätigt wird. Das Ventil 70 ist über die Anschlußleitung 72 mit dem Vorratsbehälter 14 und über die Anschlußleitung 12 mit der Unterstützungseinrichtung 10 verbunden. Bei der Öffnung der Reibungskupplung 58 durch den Fahrer wird die Druckluft über das Ventil 70 zur Unterstützungseinrichtung 10 geführt und leistet Servounterstützung für die Handschaltkraft des Fahrers. Bei geschlossener Reibungskupplung 58 wird die Druckluftzufuhr unterbrochen.

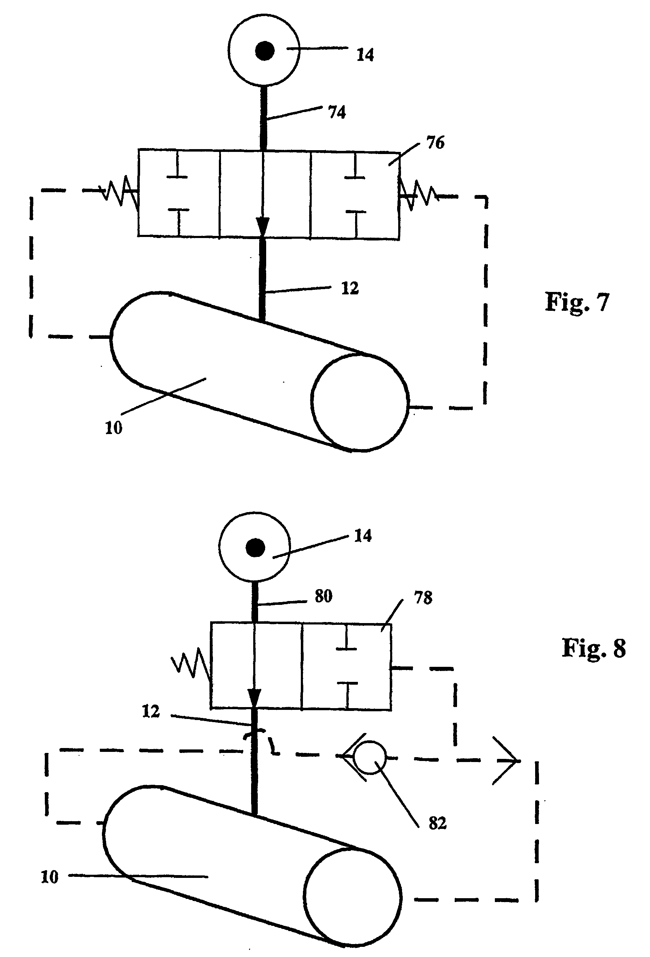

Die Fig. 7 zeigt ein 3/2-Wegeventil 76 als Druckbegrenzungsventil, das über die Anschlußleitung 74 mit dem Vorratsbehälter 14 und über die Anschlußleitung 12 mit der Unterstützungseinrichtung 10 verbunden ist. Unterhalb eines Grenzdrucks wird in der gezeigten Stellung des Ventils 76 die Druckluft durch das Ventil 76 hindurchgelassen und erzielt eine vollständige Unterstützung der Handschaltkraft. Bei Erreichen des Grenzdruckes wird das Ventil 76 in eine der anderen Stellungen verschoben und unterbricht die Druckluftzufuhr zur Unterstützungseinrichtung 10.

Die Fig. 8 zeigt ein 2/2-Wegeventil 78 als Druckbegrenzungsventil, das über die Anschlußleitung 80 mit dem Vorratsbehälter 14 und über die Anschlußleitung 12 mit der Unterstützungseinrichtung 10 verbunden ist. Die Ansteuerung des Ventils 78 geschieht hier über ein Wechselventil 82, das je nach Schaltrichtung umsteuert. Unterhalb eines Grenzdrucks wird in der gezeigten Stellung des Ventils 78 die Druckluft durch das Ventil 78 hindurchgelassen und erzielt eine vollständige Unterstützung der Handschaltkraft. Bei Erreichen des Grenzdruckes wird das Ventil 78 in die Sperrstellung verschoben und unterbricht die Zufuhr zur Unterstützungseinrichtung 10.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlußleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 34: Druckreduzierventil
- 36: Anschlußleitung
- 38: Schaltungsaufbau
- 40: 2/3-Wegeventil
- 42: Anschlußleitung
- 44: Schaltungsaufbau
- 46: 2/3-Wegeventil
- 48: Schalter
- 50: Anschlußleitung
- 52: 2/2-Wegeventil
- 54: Anschlußleitung
- 56: Steuereinrichtung
- 58: Reibungskupplung
- 60: Schwungmasse
- 62: Eingangswelle
- 64: Pedal
- 66: Ausrückhebel
- 68: Verbindungsleitung
- 70: Ventil
- 72: Anschlußleitung
- 74: Anschlußleitung
- 76: 3/2-Wegeventil
- 78: 2/2-Wegeventil
- 80: Anschlußleitung
- 81: Dichtungselement
- 82: Wechselventil

## Patentansprüche

1. Schaltvorrichtung (11, 40) mit Servounterstützungseinrichtung (10) für ein Getriebe (30) eines Fahrzeuges mit einem Vorratsbehälter (14), der mit der Unterstützungseinrichtung (10) verbunden ist, **dadurch gekennzeichnet, dass** zwischen dem Vorratsbehälter (14) und der Unterstützungseinrichtung (10) eine Reduziereinrichtung in Form einer Drossel vorgesehen ist, um die zugeführte Druckluft und dadurch die von der Unterstützungseinrichtung (10) ausgeübte Kraft zu begrenzen und einen verzögerten Aufbau der Kraft zu erreichen.

2. Schaltvorrichtung (11, 40) mit Servounterstützungseinrichtung (10) für ein Getriebe (30) eines Fahrzeuges mit einem Vorratsbehälter (14), der mit der Unterstützungseinrichtung (10) verbunden ist, **dadurch gekennzeichnet, dass** zwischen dem Vorratsbehälter (14) und der Unterstützungseinrichtung (10) eine Reduziereinrichtung in Form eines Druckreduzierventil (34) vorgesehen ist, um die zugeführte Druckluft und dadurch die von der Unterstützungseinrichtung (10) ausgeübte Kraft dauerhaft auf einen auf Fahrzeughersteller bzw. Fahrer gezielt eingestellten Wert zu begrenzen.

3. Schaltvorrichtung (11, 40) mit Servounterstützungseinrichtung (10) für ein Getriebe (30) eines Fahrzeuges mit einem Vörratsbehälter (14), der mit der Unterstützungseinrichtung (10) verbunden ist, **dadurch gekennzeichnet, dass** zwischen dem Vorratsbehälter (14) und der Unterstützungseinrichtung (10) eine Reduziereinrichtung in Form eines Druckbegrenzungsventils (34) vorgesehen ist, um die zugeführte Druckluft und dadurch die von der Unterstützungseinrichtung (10) ausgeübte Kraft in Abhängigkeit von der gewählten Schaltgasse zu begrenzen.

4. Schaltvorrichtung (11, 40) mit Servounterstützungseinrichtung (10) für ein Getriebe (30) eines Fahrzeuges mit einem Vorratsbehälter (14), der mit der Unterstützungseinrichtung (10) verbunden ist, **dadurch gekennzeichnet, dass** zwischen dem Vorratsbehälter (14) und der Unterstützungseinrichtung (10) eine Reduziereinrichtung (70) vorgesehen ist, um die zugeführte Druckluft und dadurch die von der Unterstützungseinrichtung (10) ausgeübte Kraft in Abhängigkeit von der Betätigung der Fahrzeugkupplung (58) zu begrenzen.

5. Schaltvorrichtung (11, 40) mit Servounterstützungseinrichtung (10) für ein Getriebe (30) eines Fahrzeuges mit einem Vorratsbehälter (14), der mit der Unterstützungseinrichtung (10) verbunden ist, **dadurch gekennzeichnet, dass** zwischen dem Vorratsbehälter (14) und der Unterstützungseinrichtung (10) eine Reduziereinrichtung in Form eines elektrisch angesteuerten 2/2-Wegeventil (52) vorgesehen ist, das die Zufuhr der Druckluft und dadurch die von der Unterstützungseinrichtung (10) ausgeübte Kraft vollständig unterbindet.

6. Schaltvorrichtung (11, 40) mit Servounterstützungseinrichtung (10) nach Anspruch 3, **dadurch gekennzeichnet, dass** das Druckbegrenzungsventil ein 2/2-Wegeventil (78) ist.

7. Schaltvorrichtung (11, 40) mit Servounterstützungseinrichtung (10) nach Anspruch 3, **dadurch gekennzeichnet, dass** das Druckbegrenzungsventil ein 3/2-Wegeventil (76) ist, das mit einem Wechselventil (82) zusammenwirkt.

## Claims

1. The invention relates to a shifting device (11, 40) with a power assistance mechanism (10) for an automobile transmission (30) with a reservoir (14) connected to the power assistance mechanism (10), **characterized in that** between the reservoir (14) and the power assistance mechanism (10) there is a reducing mechanism in the form of a choke for reducing the compressed air and thus the power of the power assistance mechanism (10) and for achieving a delayed buildup of power.

2. A shifting device (11,40) with a power assistance mechanism (10) for an automobile transmission (30) with a reservoir (14) connected to the power assistance mechanism (10), **characterized in that** between the reservoir (14) and the power assistance mechanism (10) there is a reducing mechanism in the form of a pressure-reducing valve (34) for permanent reduction of the compressed air and thus the power of the power assistance mechanism (10) to a value set by the vehicle manufacturer or the driver.

3. A shifting device (11, 40) with a power assistance mechanism (10) for an automobile transmission (30) with a reservoir (14) connected to the power assistance mechanism (10), **characterized in that** between the reservoir (14) and the power assistance mechanism (10) there is a reducing mechanism in the form of a pressure-reducing valve (34) for reducing the compressed air and thus the power of the power assistance mechanism (10) in relation to the shift gate selected.

4. A shifting device (11, 40) with a power assistance mechanism (10) for an automobile transmission (30) with a reservoir (14) connected to the power assistance mechanism (10), **characterized in that** between the reservoir (14) and the power assistance mechanism (10) there is a reducing mechanism (70) for reducing the compressed air and thus the power of the power assistance mechanism (10) in relation to the activation of the vehicle clutch (58).

5. A shifting device (11, 40) with a power assistance mechanism (10) for an automobile transmission (30) with a reservoir (14) connected to the power assistance mechanism (10), **characterized in that** between the reservoir (14) and the power assistance mechanism (10) there is a reducing mechanism in the form of an electrically controlled two/two-way valve (52) for complete prevention of compressed-air supply and thus of the power of the power assistance mechanism (10).

6. A shifting device (11, 40) with a power assistance mechanism (10) according to claim 3, **characterized in that** the pressure-reducing valve is a two/two-way valve (78).

7. A shifting device (11, 40) with a power assistance mechanism (10) according to claim 3, **characterized in that** the pressure-reducing valve is a three/two-way valve (76) acting together with a shuttle valve (82).

## Revendications

1. Dispositif de changement de vitesses (11, 40) doté d'un équipement à servo-assistance (10) pour une boîte de vitesses (30) d'un véhicule équipé d'un réservoir (14), celui-ci étant lié au dispositif à servo-assistance (10), **caractérisé en ce que** entre le réservoir (14) et le dispositif à servo-assistance (10) il y a un élément réducteur réalisé sous forme d'un papillon, afin de pouvoir limiter le débit de l'air comprimé et par conséquent la force exercée par le dispositif à servo-assistance (10) et afin d'atteindre une augmentation graduée et ralentie de la force.

2. Dispositif de changement de vitesses (11, 40) doté d'un équipement à servo-assistance (10) pour une boîte de vitesses (30) d'un véhicule équipé d'un réservoir (14) celui-ci étant lié au dispositif à servo-assistance (10), **caractérisé en ce que** entre le réservoir (14) et le dispositif à servo-assistance (10) il y a un élément réducteur réalisé sous forme d'une valve réductrice de la pression (34), afin de pouvoir limiter dans le temps l'air comprimé amené et par conséquent la force exercée par le dispositif à servo-assistance (10) à une valeur précise réglée par le constructeur du véhicule ou par le conducteur.

3. Dispositif de changement de vitesses (11, 40) doté d'un équipement à servo-assistance (10) pour une boîte de vitesses (30) d'un véhicule équipé d'un réservoir (14) celui-ci étant lié au dispositif à servo-assistance (10), **caractérisé en ce que** entre le réservoir (14) et le dispositif à servo-assistance (10) il y a un élément réducteur réalisé sous forme d'une valve réductrice de la pression (34) afin de pouvoir limiter l'air comprimé amené et par conséquent la force exercée par le dispositif à servo-assistance (10) en fonction du couloir de changement de vitesses sélectionné.

4. Dispositif de changement de vitesses (11, 40) doté d'un équipement à servo-assistance (10) pour une boîte de vitesses (30) d'un véhicule équipé d'un réservoir (14) celui-ci étant lié au dispositif à servo-assistance (10), **caractérisé en ce que** entre le réservoir (14) et le dispositif à servo-assistance (10) il y a un élément réducteur (70), afin de pouvoir limiter l'air comprimé amené et par conséquent la force exercée par le dispositif à servo-assistance (10) en fonction de l'enclenchement de l'embrayage du véhicule (58).

5. Dispositif de changement de vitesses (11, 40) doté d'un équipement à servo-assistance (10) pour une boîte de vitesses (30) d'un véhicule équipé d'un réservoir (14) celui-ci étant lié au dispositif à servo-assistance (10), **caractérisé en ce que** entre le réservoir (14) et le dispositif à servo-assistance (10) il y a un élément réducteur réalisé sous forme d'un distributeur 2/2 (52) qui coupe complètement l'amenée de l'air comprimé et ainsi la force exercée par le dispositif à servo-assistance (10).

6. Dispositif de changement de vitesses (11, 40) doté d'un équipement à servo-assistance (10) selon la revendication 3, **caractérisé en ce que** la valve réductrice de la pression est un distributeur 2/2 (78).

7. Dispositif de changement de vitesses (11, 40) doté d'un équipement à servo-assistance (10) selon la revendication 3, **caractérisé en ce que** la valve réductrice de la pression est un distributeur 3/2 (76) coopérant avec une soupape d'inversion (82).
